# EUROPÄISCHE PATENTSCHRIFT

(11) **EP 2 776 741 B1**
(45) Veröffentlichungstag und Bekanntmachung des Hinweises auf die Patenterteilung: **13.04.2016**
(21) Anmeldenummer: 12779010.3
(22) Anmeldetag: 16.10.2012
(51) Int. Cl.: F16H 55/30

(54) **SPRITZGEGOSSENES TASCHENKETTENRAD AUS FASERVERSTÄRKTEM KUNSTSTOFF**
INJECTION MOLDED POCKET-TYPE CHAIN WHEEL MADE OF FIBER-REINFORCED PLASTIC
PIGNON À POCHES MOULÉ PAR INJECTION CONSTITUÉ DE MATIÈRE PLASTIQUE RENFORCÉE DE FIBRES

(30) Priorität: 10.11.2011 DE 102011055204
(43) Veröffentlichungstag der Anmeldung: 17.09.2014
(73) Patentinhaber: RUD Ketten Rieger & Dietz GmbH u. Co. KG, 73432 Aalen (DE)
(72) Erfinder: HERZOG, Heribert, 73432 Aalen-Ebnat (DE); FRICK, Achim, 73431 Aalen (DE); DOLDE, Timo, 72663 Grossbettlingen (DE); STRABERGER, Ralph, 73230 Kirchheim (DE)
(74) Vertreter: Grünecker Patent- und Rechtsanwälte PartG mbB
(86) Internationale Anmeldenummer: PCT/EP2012/070503
(87) Internationale Veröffentlichungsnummer: WO 2013/068208

(56) Entgegenhaltungen:
- EP-A2- 1 083 112
- DE-A1- 4 130 073
- DE-A1-102004 009 535
- DE-A1-102006 036 162
- DE-A1-102008 018 514
- DE-C1- 3 244 361
- DE-C1- 19 731 593
- DE-U1-202005 007 915
- FR-A- 1 401 923
- FR-A- 1 536 434
- US-A- 2 321 702

## Beschreibung

Die Erfindung betrifft ein Taschenkettenrad für Gliederketten, insbesondere Rund- oder Profilstahlketten, dessen Umfangsfläche mit in Umfangsrichtung abwechselnd unterschiedlich geformten, sich radial in das Taschenkettenrad erstreckenden Taschen versehen ist.

Taschenkettenräder, mit denen Gliederketten umgelenkt oder angetrieben werden, sind schon lange bekannt. Am weitesten verbreitet sind Taschenkettenräder für Rund- und Profilstahlketten. Sie werden in Fördereinrichtungen, beispielsweise Kettentrieben oder Hebezeugen verwendet.

Die Form der Taschen hängt zum einen von der Form der Kettenglieder der Gliederketten ab. Die Taschenform für Rundstahlketten, deren Glieder einen im Wesentlichen kreisförmigen Materialquerschnitt aufweisen, unterscheidet sich von der Taschenform für Profilstahlketten, deren Querschnitt nicht kreisförmig sondern beispielsweise rechteckig ist. Die Form der Taschen wird zum anderen auch durch die Orientierung bestimmt, in der die Gliederkette auf die Umfangsfläche aufläuft. Auf dem Markt haben sich zwei unterschiedliche Orientierungen durchgesetzt: In einer ersten Variante kann die Gliederkette gerade auf der Umfangsfläche aufliegen, so dass die von den Kettengliedern aufgespannten Ebenen abwechselnd senkrecht und parallel zur Axialrichtung verlaufen. Ferner kann die Gliederkette auch schräg über das Taschenkettenrad bzw. die Umfangsflächen geleitet sein, so dass die von den Kettengliedern aufgespannten Ebenen etwa im Winkel von 45°bis 50°zur Dreh- bzw. Axialrichtung des Taschenkettenrades verlaufen.

Aus dem Stand der Technik sind Taschenkettenräder bereits bekannt.

Die DE 41 30 073 A1 zeigt beispielsweise ein als Umlenkrad verwendbares Taschenkettenrad, bei dem die Kette, hier eine Rundstahlkette, gerade über die Umfangsfläche geführt ist.

Die DE 197 31 593 C1 befasst sich mit einem Taschenkettenrad für eine Profilkette mit einem D-förmigen Profilquerschnitt. Die Kette ist schräg über die Umfangsfläche des Kettenrades geführt.

Taschenkettenräder für schräg auflaufende Rundstahlketten zeigen die DE 94 09 458 U1, die DE 10 2004 009 535 A1 und die DE 20 2005 007 915 U1.

Die FR-A-1 536 434 wird als nächstliegender Stand der Technikangesehen.

Nachteilig ist bei diesen bekannten Kettenrädern neben einem hohen Herstellungspreis aufgrund der aufwendigen Fertigung die hohe Lärmentwicklung im Betrieb, die eng mit dem Schwingungsverhalten der Taschenkettenräder verknüpft ist. Bei den Bauformen der bekannten Taschenkettenräder besteht zudem bei schnellen Lastwechseln, insbesondere bei Ein- und Ausschaltstößen, und bei hohen Umdrehungsgeschwindigkeiten die Gefahr, dass die Last ins Schwingen kommt.

Ausgehend von diesem Problem sieht sich der Fachmann vor die Aufgabe gestellt, ein billigeres, im Gebrauch leiseres und schwingungsärmeres Taschenkettenrad zu schaffen.

Für das eingangs genannte Taschenkettenrad löst der Fachmann diese Aufgabe erfindungsgemäß dadurch, dass das Taschenkettenrad in einem Stück mittels eines Spritzgussverfahrens aus wenigstens einem faserverstärkten Kunststoff gefertigt ist, wobei die Fasern (31) des faserverstärkten Kunststoffes in radialer Richtung im Inneren (I) des Taschenkettenrades zwischen den Taschen (3, 4) und einer Nabe (8) eine im Wesentlichen radiale Hauptfaserrichtung (30) und am Grund (20, 26) der Taschen (3, 4) eine im Wesentlichen oberflächenparallele Hauptfaserrichtung (30) aufweisen.

Aus dieser Lösung ergibt sich ein Taschenkettenrad, das zu geringen Kosten und mit gleichbleibender Qualität in hoher Stückzahl herstellbar ist. Der Kunststoff dämpft Schläge und Schwingungen deutlich wirksamer als die bekannten Taschenkettenräder aus Metall. Daraus resultiert nicht nur eine geringere Geräuschentwicklung im Betrieb, sondern auch eine verbesserte Schwingungsdämpfung. Durch die Verwendung eines faserverstärkten Kunststoffes werden eine hohe Festigkeit und ein hoher Verschleißwiderstand erreicht, so dass das erfindungsgemäße Taschenkettenrad hohe Lasten aufnehmen kann.

Diese Lösung kann durch weitere, jeweils unabhängig voneinander und für sich vorteilhafte Ausgestaltungen weiter verbessert werden, wie sie im Folgenden beschrieben sind.

So kann gemäß einer ersten vorteilhaften Ausgestaltung der Kunststoff ein glasfaserverstärkter Kunststoff sein. Ein glasfaserverstärkter Kunststoff hat sich gegenüber kohlefaserverstärkten Kunststoff in internen Versuchen zur Herstellung von Taschenkettenrädern als vorteilhafter erwiesen, da Taschenkettenräder aus kohlefaserverstärkten Kunststoff im Dauerbetrieb eher Sprödbruch zu erleiden scheinen als Taschenkettenräder aus glasfaserverstärktem Kunststoff.

Um die in den Taschen aufliegenden Kettenglieder vor einer die Lebensdauer mindernden Biegewechselbelastung zu schützen, sollte der Grund der Taschen, auf dem jedes Kettenglied aufliegt, eine erhöhte Biegesteifigkeit aufweisen. Die Biegefestigkeit des Taschenkettenrades kann insbesondere am Grund der Taschen gegenüber dem Inneren erhöht sein.

Im Inneren des Taschenkettenrades wird die von der Gliederkette getragene Last vor allem im Bereich zwischen den Taschen auf der umschlungenen Seite des Taschenkettenrades und der Nabe eine hohe Druckspannung aufgebaut. Um diese Druckbelastung aufzunehmen, weist das Innere des Taschenkettenrades eine höhere Druckstabilität auf als der Randbereich des Taschenkettenrades, insbesondere der Grund der Taschen.

Die Biegesteifigkeit der Randschicht und die Druckstabilität des Inneren des Kettenrades kann durch eine Temperatursteuerung von Form und/oder Schmelze während des Spritzgussverfahrens eingestellt werden.

Die Taschen des erfindungsgemäßen Taschenkettenrades sind bevorzugt in einem einzigen Herstellschritt zusammen mit dem übrigen Taschenkettenrad im Zuge des Spritzgussverfahrens hergestellt. Die Taschen sind insbesondere nicht durch beispielsweise ein spanendes Bearbeitungsverfahren nachbearbeitet. Um die Biegefestigkeit zu erhöhen, kann jedoch eine nicht spanabhebende, beispielsweise chemische oder thermische Nachbehandlung erfolgen.

Um glattere Auflagen für die Gliederketten im Bereich der Tasche zu erhalten, ist es von Vorteil, wenn die Faserlänge höchstens 1 mm beträgt.

Die Belastbarkeit und der Verschleißwiderstand des Kunststoffrades lässt sich gemäß einer weiteren vorteilhaften Ausgestaltung erhöhen, wenn die Fasern des faserverstärkten Kunststoffes eine bezüglich einer senkrecht zur Axialrichtung verlaufende Mittenebene des Taschenkettenrades symmetrische Verteilung der Hauptfaserrichtungen aufweisen. Da die Belastungen des Taschenkettenrades in aller Regel ebenfalls symmetrisch zur Mittenebene verlaufen, ist bei dieser Ausgestaltung die innere Struktur des Taschenkettenrades optimal an den Belastungsfall angepasst.

Belastbarkeit und Verschleißfestigkeit des Taschenkettenrades Sind erfindungsgemäß dadurch verbessert, dass die Fasern des faserverstärkten Kunststoffes im Inneren des Taschenkettenrades, vorzugsweise im radial gelegenen Mittenbereich zwischen den Taschen und einer Nabe, eine im Wesentlichen radiale Hauptfaserrichtung aufweisen. Bei dieser Ausführung können die im Betrieb radial zur Drehachse nach innen gerichteten Druckkräfte von der Faserstruktur am Besten aufgenommen werden.

Um verschleißfeste Taschen zu erhalten, die im Betrieb durch die Reibung mit den Gliederketten nur wenig abgetragen werden, weisen die Fasern des faserverstärkten Kunststoffes erfindungsgemäß am Grund der Taschen eine im Wesentlichen oberflächenparallele Hauptfaserrichtung auf. Die Hauptfaserrichtung am Grund der Taschen kann zu einem Rand hin, also axial, oder in Umfangsrichtung verlaufen. Eine axiale Hauptfaserrichtung am Grund der Taschen hat den Vorteil, dass Bindenähte an den im Betrieb weniger belasteten Rand des Taschenkettenrades drängen.

Bei spritzgussgefertigten Teilen können an den Stellen, an denen die Ströme der Kunststoffschmelze aus mehreren Richtungen aufeinandertreffen und dann erstarren, Bindenähte entstehen. Im Bereich der Bindenähte ist die Hauptfaserrichtung undefiniert. Gemäß einer weiteren vorteilhaften Ausgestaltung sieht die Erfindung deshalb vor, dass das Taschenkettenrad an seinem Umfang wenigstens einen gegenüber den Taschen radial vorspringenden Rand aufweist und dass sich die Bindenaht bzw. Bindenähte größtenteils, also mit einer Häufigkeit von mehr als 50 %, vorzugsweise nahezu ausschließlich bzw. ausschließlich in diesem Rand befinden. Der Rand kann eine Doppelfunktion erfüllen, indem er die Taschen in axialer Richtung begrenzt und somit eine seitliche Führung für die auf die Umfangsfläche auflaufenden Kettenglieder bildet. Natürlich können auch zwei solcher Ränder zu den beiden axialen Seiten der Taschen vorgesehen sein. Durch die Verlagerung der Bindenähte in den wenigstens einen Rand wird eine undefinierte Faserrichtung in den besonders stark belasteten Bereichen des Taschenkettenrades vermieden. Der Rand ist bevorzugt in Umfangsrichtung durchgängig ausgestaltet und kann zur Mitte hin schräg abfallen, um ein ruckfreies Auflaufen der Kette zu ermöglichen.

Das Taschenkettenrad kann ferner mit einer spritzgegossenen, drehmomentübertragenden Welle-Nabe-Verbindung versehen sein. Die Welle-Nabe-Verbindung, beispielsweise eine Nut für eine Nut-Feder-Verbindung, ein Konus oder eine Keilverzahnung, werden bevorzugt in einem einzigen Arbeitsgang zusammen mit dem übrigen Taschenkettenrad gefertigt. Das Taschenkettenrad kann auch mit einer Welle-Nabe-Verbindung aus einem umspritzten Einlageelement versehen sein.

Um die Ausfallsicherheit zu erhöhen, kann das Taschenkettenrad mit wenigstens einer umspritzten Metallscheibe versehen sein, die senkrecht zur Axialrichtung liegt und sich zwischen zumindest einen Teil der Taschen gleicher Orientierung erstreckt. Die Metallscheibe kommt somit zwischen zwei aufeinanderfolgenden Taschen gleicher Orientierung zu liegen und verhindert ein Durchrutschen der Gliederkette auf der Umfangsfläche selbst dann, wenn das Kunststoffmaterial an diesen Stellen gebrochen ist. Die Metallscheibe ist bevorzugt vollständig im Taschenkettenrad eingebettet, so dass sie im Bereich der Taschen nicht mit der Gliederkette in Berührung kommen kann, solange das Taschenkettenrad nicht beschädigt oder über das zulässige Maß hinaus verschlissen ist. Bei einem Offenliegen der umspritzten Metallscheibe bestünde die Gefahr, dass die Gliederkette durch den Kontakt mit der Metallscheibe punktuell verschleißt und sich die Tragkraft der Gliederkette verringert. Die Metallscheibe kann mit Durchlässen versehen sein, so dass der Schmelzefluss durch die Metallscheibe hindurchtreten kann. Die Metallscheibe kann axial vorspringende Bereich aufweisen, um die Verankerung in der Kunststoffmatrix zu verbessern. Die Metallscheibe kann aus Metallblech gestanzt sein; ebenso können die Durchlässe und/oder Vorsprünge gestanzt sein.

Um einen für die mechanische Belastbarkeit des Tascfienkettenrades günstigen Faserverlauf zu erhalten, scheint es vorteilhaft zu sein, wenn das Taschenkettenrad wenigstens eine Stirnseite mit einer im topologischen Sinne wegzusammenhängenden, beispielsweise scheibenförmigen Stirnwand, im Unterschied zu einer speichen- oder fachwerkartigen Ausgestaltung der Stirnseite aufweist. Ein Nebeneffekt der Ausgestaltung mit einer Stirnwand besteht in der gegenüber Speichen oder Fachwerk geringeren Neigung zur Verschmutzung. Dies ist insbesondere bei einer Verwendung des Taschenkettenrades in Bereichen mit strengen Hygienevorschriften oder in Bereichen, in denen Substanzen eingesetzt werden, die auf Dauer den Kunststoff angreifen können, von Vorteil. Die Stirnwand kann auch eine ununterbrochene Wandfläche bilden, um noch weniger Angriffsflächen für Verschmutzungen zu bieten

Zur Erhöhung der Dämpfungseigenschaften ist es ferner von Vorteil, wenn gemäß einer weiteren Ausgestaltung in wenigstens einer Stirnseite bzw. Stirnwand sich axial in das Taschenkettenrad erstreckende Ausnehmungen vorhanden sind. Diese Ausnehmungen erhöhen die Dämpfungscharakteristik des Taschenkettenrades sowohl in radialer als auch in torsionaler Richtung. Die Ausnehmungen können insbesondere sacklochartig ausgebildet sein.

Um die Festigkeit des Taschenkettenrades möglichst wenig zu beeinflussen, können die Ausnehmungen in axialer Richtung Vorsprünge, die in Umfangsrichtung jeweils Taschen für gleichartige Kettenglieder der Gliederkette voneinander abgrenzen und in axialer Richtung vorspringen, überlappen.

Die Vorsprünge können eine radial nach außen weisende Fläche aufweisen, die auf Höhe der radial nach außen weisenden Fläche des wenigstens einen Randes liegt. Insbesondere kann die radial außen liegende Fläche des Vorsprunges sich in der entsprechenden Fläche des Randes glatt fortsetzen. Auf diese Weise werden festigkeitsmindernde Durchmessersprünge vermieden.

So können beispielsweise die Ausnehmungen bei Taschenkettenrädern für gerade auflaufende Gliederketten jeweils zwischen den Taschen für die liegenden Kettenglieder mit parallel zur Axialrichtung verlaufenden Ebenen angeordnet sein. Insbesondere können sich die Ausnehmungen an den beiden Stirnseiten bei derartigen Taschenkettenrädern axial gegenüberliegen.

Bei Taschenkettenrädern für schräg auflaufende Gliederketten können die Ausnehmungen abwechselnd jeweils zwischen gleichartigen Taschen in der Stirnseite angeordnet sein, bei der die Taschen die geringere Tiefe aufweisen. Bei den Taschenkettenrädern mit schräg auflaufender Gliederkette kann bei einigen Varianten der weniger tiefe Abschnitt der Tasche den axial außen liegenden Schenkel eines Kettengliedes abstützen. Bei dieser Anordnung ist sichergestellt, dass eine nur geringe Schwächung des Taschenkettenrades auftritt, da stets ausreichend Materialquerschnitt vorhanden ist, um die im Betrieb auftretenden mechanischen Spannungen aufzunehmen.

Um während des Spritzgießens eine gleichmäßige Umströmung der Ausnehmungen zu erhalten und in Fließrichtung der Kunststoffschmelze über den Verlauf des Spritzgießens einen sich nur gering ändernden Strömungsquerschnitt aufrechtzuerhalten, ist es von Vorteil, wenn das Volumen der Ausnehmungen an einer Stirnseite wenigstens dem Volumen der von den axialen Vorsprüngen getrennten, dieser Stirnseite zugewandten Abschnitten der Taschen zumindest etwa entspricht. Alternativ oder kumulativ kann das in Umfangsrichtung zwischen zwei aufeinanderfolgenden Vorsprüngen liegende Volumen einer Tasche dem Volumen einer Ausnehmung entsprechen. Diese Maßnahmen führen jeweils dazu, dass aufgrund der Verdrängungswirkung der Ausnehmungen die Bindenähte weg von den radial unterhalb der Taschen angeordneten Bereich in Richtung der Stirnseiten bzw. des wenigstens einen Randes, falls ein solcher vorhanden ist, verschoben werden.

Wenn gemäß einer weiteren vorteilhaften Ausgestaltung die in den Stirnseiten des Taschenkettenrades liegende Öffnung der Ausnehmungen in radialer Richtung nach außen schmaler wird und/oder sich die Ausnehmungen in axialer Richtung in das Taschenkettenrad hinein pyramiden- oder pyramidenstumpfförmig verjüngen, kann die Entstehung von Bindenähten in diesem Bereich ebenfalls vermieden werden.

Der Grund der Ausnehmungen kann in Umfangsrichtung jeweils zwischen gleichartigen Taschen liegen, um einen verbesserten Schmelzefluss in Richtung der Stirnseiten zu erzielen.

Die Taschen können im Bereich ihrer in Umfangsrichtung gelegenen Mitte jeweils mit wenigstens einer Aufnahmenut versehen sein, in denen die Schweißnähte der Kettenglieder aufgenommen werden können, wenn das Kettenglied in der Tasche einliegt. Im Bereich der Schweißnähte sind die Kettenglieder meistens etwas verdickt, so dass eine erhöhte Verschleißgefahr an den Stellen besteht, an denen die Schweißnaht mit dem Taschenkettenrad in Kontakt kommt. Die Aufnahmenut öffnet sich in radialer Richtung, wobei sich die Aufnahmenut in radialer Richtung nach außen verbreitert, so dass die Schweißnähte auch bei Gliederketten mit eher groben Lagetoleranzen leichter eintauchen können. Der Öffnungswinkel, in dem sich die Aufnahmenut nach radial außen erweitert, beträgt zumindest etwa 110° bis etwa 130°, bevorzugt etwa 120°. Die Aufnahmenut kann sich jeweils an der axialen Stirnseite eines zwei gleichartige Taschen voneinander trennenden, sich axial erstreckenden Vorsprunges befinden.

Im Folgenden ist die Erfindung anhand von Beispielen und unter Verweis auf die Figuren beispielhaft näher erläutert. Nach Maßgabe der obigen Ausführungen können bei den unterschiedlichen Ausführungsformen einzelne Merkmale weggelassen oder hinzugefügt sein, oder Merkmale der einen Ausführungsform bei einer anderen Ausführungsform verwendet werden, je nachdem, ob der mit dem jeweiligen Merkmal verknüpfte Vorteil bei dem in Betracht gezogenen Anwendungsfall vorhanden ist oder nicht.

Es zeigen:
- Fig. 1: eine schematische Perspektivansicht eines Ausführungsbeispiels eines erfindungsgemäßen Taschenkettenrades aus spritzgegossenem, faserverstärkten Kunststoff;
- Fig. 2: eine schematische Schnittdarstellung durch ein weiteres Ausführungsbeispiel eines erfindungsgemäßen Taschenkettenrades;
- Fig. 3: eine schematische Schnittdarstellung durch ein weiteres Ausführungsbeispiel eines erfindungsgemäßen Taschenkettenrades.

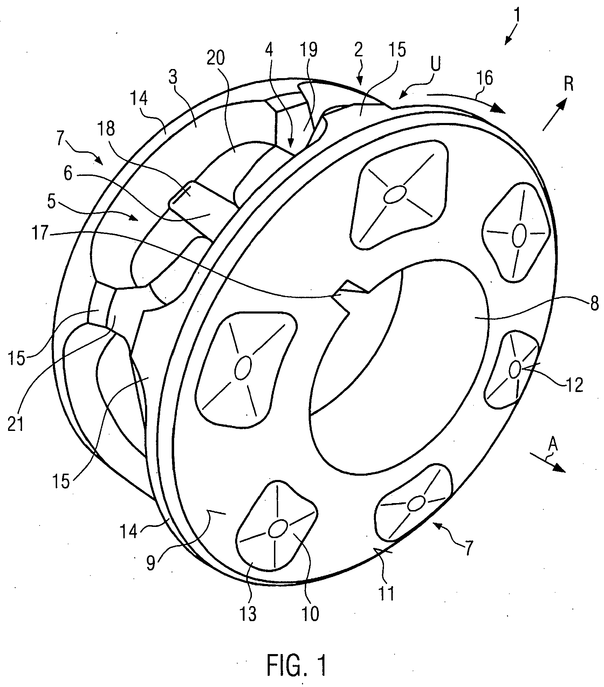

Zunächst wird der Aufbau eines erfindungsgemäßen Taschenkettenrades 1 beispielhaft anhand des Ausführungsbeispiels der Fig. 1 erläutert. Das Taschenkettenrad 1 ist bevorzugt von einem thermoplastischen Kunststoff mit einer Faserverstärkung spritzgegossen. Zur Faserverstärkung sind Glasfasern bevorzugt. Der Kunststoff kann eine Dichte zwischen 0,9 und 2,5 kg/dm³ aufweisen.

Das Taschenkettenrad 1 ist an seiner radial nach außen weisenden Umfangsfläche 2 mit in Umfangsrichtung abwechselnd unterschiedlich geformten Taschen 3, 4 versehen, in denen im Betrieb die Kettenglieder einer Gliederkette (nicht gezeigt) aufgenommen sind. Die Taschen sind in einem Herstellschritt im Zuge der Herstellung des gesamten Taschenkettenrades mittels eines Schirmguss und/oder eines Schirmangusses mitgeformt und nicht nachbearbeitet. Fig. 1 zeigt lediglich beispielhaft ein Taschenkettenrad für eine Rundstahlkette, die gerade, also mit liegenden und stehenden Kettengliedern, über die Umfangsfläche 2 des Taschenkettenrads 1 geführt wird.

Die Taschen 3, 4 weisen jeweils eine zu den Kettengliedern (nicht gezeigt) komplementäre Form auf. Die Taschen 3 erstrecken sich weniger weit in radialer Richtung in das Taschenkettenrad 1 als die Taschen 4. Die Taschen 3 nehmen die liegenden Kettenglieder auf, deren Ebene parallel zu einer Axialrichtung A verläuft. Die Taschen 4 nehmen die dazwischen liegenden stehenden, senkrecht zur Axialrichtung A orientierten Kettenglieder auf.

Die Taschen 3 werden durch die in der Mittenebene M des Taschenkettenrades 1 liegenden Taschen 4 in zwei axiale Teilbereiche 5 getrennt, die in der in Umfangsrichtung U gelegenen Mitte der jeweiligen Tasche 3 durch einen axial verlaufenden Steg 6 miteinander verbunden sind. Der Steg 6 trennt aufeinanderfolgende Taschen 4.

Die Taschen 4 sind, in axialer Richtung A weniger breit als die Taschen 3, erstrecken sich jedoch in radialer Richtung R tiefer in das Taschenkettenrad 1. Axialrichtung A läuft parallel zur Drehrichtung des Taschenkettenrades 1. Die Taschen 3, 4 sind zueinander jeweils um eine halbe Taschenteilung versetzt.

Für andere Formen von Gliederketten, insbesondere für Profilketten oder für schräg um das Taschenkettenrad 1 geführte Gliederketten, bei denen die Ebenen der Kettenglieder in einem Winkel, meist etwa 45° bis 55°, zur axialen Richtung A verlaufen, weisen die Taschen 3, 4 nicht die in Fig. 1 dargestellte Form auf, sondern sind entsprechend komplementär zu den Kettengliedern ausgestaltet.

Das Taschenkettenrad 1 weist zwei in axialer Richtung weisende Stirnseiten 7 auf, von denen in Fig. 1 nur die eine Stirnseite sichtbar ist. Die nicht sichtbare Stirnseite 7 ist bei dem Ausführungsbeispiel der Fig. 1 genauso ausgestaltet wie die sichtbare Stirnseite, die im Folgenden beschrieben ist.

Die Stirnseite 7 weist eine breitflächig, also nicht nur im Bereich von Speichen oder Fachwerksabschnitten, sich durchgängig von einer Nabe 8 zur Umfangsfläche 2 erstreckende Stirnwand 9 auf. Die Stirnwand 9 ist im topologischem Sinne weg zusammenhängend und bevorzugt in etwa scheibenförmig.

Die Stirnwand 9 kann mit einer oder mehreren Ausnehmungen 10 versehen sein. Die Ausnehmungen können sich in axialer Richtung in das Taschenkettenrad hinein verjüngen. Sie können insbesondere kegel- oder kegelstumpf-, pyramiden- oder pyramidenstumpfförmig ausgestaltet sein. Die in der Ebene 11 der Stirnwand 9 liegende Öffnung 12 der wenigstens einen Ausnehmung 10 ist beim Ausführungsbeispiel der Fig. 1 trapezförmig und verjüngt sich in radialer Richtung R nach außen. Die Öffnung 12 wird also in radialer Richtung R nach außen hin schmaler. Vorzugsweise sind alle Kanten 13 der Ausnehmung stark gerundet, um das Festsetzen von Verschmutzungen zu vermeiden.

Das Taschenkettenrad 1 in der in Fig. 1 beispielhaft dargestellten Ausgestaltung ist bezüglich der Mittenebene M symmetrisch ausgestaltet. Die Stirnwände 9 überragen die Taschen 3, 4 in radialer Richtung R und bilden einen in radialer Richtung R vorspringenden Rand 14. Im Rand 14 befinden sich bevorzugt sämtliche Bindenähte des Taschenkettenrades 1.

Der Rand 14 begrenzt in axialer Richtung A die Taschen 3, 4. Er bildet zwischen gleichartigen Taschen, in Fig. 1 sind dies die Taschen 3 für die liegenden Kettenglieder, in axialer Richtung A vorspringende Vorsprünge 15 auf. Im Falle des für gerade auflaufende Gliederketten ausgestalteten Taschenkettenrades 1 liegen die Vorsprünge 15 sich in axialer Richtung gegenüber und begrenzen die Taschen 3 in Umfangsrichtung U. Die Vorsprünge 15 liegen ferner in Umfangsrichtung U auf Höhe der Mitten der Taschen 4. Die Ausnehmungen 10 sind in Umfangsrichtung so verteilt, dass sie sich axial mit den Vorsprüngen 15 überlappen.

Das Volumen einer Ausnehmung 10 entspricht bevorzugt dem Volumen des Teilbereichs 5 einer Tasche 3, die sich zwischen zwei in Umfangsrichtung U aufeinanderfolgenden Vorsprüngen 15 befindet und auf der axialen Seite der entsprechenden Ausnehmung 10 angeordnet ist.

Die Ausnehmungen 10 stellen zum Einen sicher, dass bei der Herstellung des Taschenkettenrades 1 die Schmelze durch in etwa gleichbleibende Fließquerschnitte hindurchtritt, so dass keine zu starken Beschleunigungen oder Verlangsamungen des Schmelzeflusses während des Spritzgießvorganges auftreten. Zum Anderen stellen die Ausnehmungen 10 sicher, dass an den radial äußeren Rändern des Taschenkettenrades über den Umfang verteilt stets in etwa gleiche Materialmengen vorhanden sind und beispielsweise im Bereich der Vorsprünge 15 keine Massenkonzentrationen auftreten. Auf diese Weise ist sichergestellt, dass die Bindenähte sich nicht im Inneren des Taschenkettenrades 1 befinden. Ferner erhöhen die Ausnehmungen 10 die Dämpfungseigenschaften des Taschenkettenrades 1, so dass sein Lauf bei aufliegender Kette ruhiger, geräuschärmer mit weniger Schwingungen erfolgt.

Die Nabe 8 kann eine spritzgeformte, drehmomentübertragende Welle-Nabe-Verbindung ausbilden. In Fig. 1 ist lediglich beispielhaft eine Nut 17 für eine Nut-Feder-Verbindung dargestellt. Anstelle dieser Welle-Nabe-Verbindung kann selbstverständlich auch beispielsweise eine Konusnabe oder keilverzahnte Nabe spritzgegossen sein. Anstelle einer spritzgegossenen Welle-Nabe-Verbindung kann auch ein umspritztes Einlageelement beispielsweise aus Metall vorgesehen sein. Das Einlageelement kann die Welle-Nabe-Verbindung vorgeformt ausbilden, so dass mit der Fertigstellung des Taschenkettenrades die Welle-Nabe-Verbindung fertig vorliegt.

Die Kettenglieder der bei Taschenkettenrädern eingesetzten Gliederketten sind oft aus einem zusammengebogenen und stumpf verschweißten Draht gefertigt und im Bereich der Schweißnaht verdickt. Um die Verdickung in den Taschen 3, 4 aufzunehmen, ist in jeder Tasche 3, 4 eine Aufnahmenut 18, 19 im Bereich der jeweiligen in Umfangsrichtung liegenden Taschenmitte vorgesehen. Bei den Taschen 3 für die liegenden Kettenglieder befindet sich die Aufnahmenut 18 am Grund 20 der Taschen 3 und springt in radiale Richtung nach innen zurück. In radialer Richtung R nach außen verbreitet sich die Aufnahmenut 18 vorzugsweise um einen Winkel von zwischen etwa 110° und etwa 130 °, bevorzugt ca. 120°.

Die Aufnahmenuten 19 der Taschen 4 für die stehenden Kettenglieder liegen zwischen den horizontalen Taschen 3 an den in axialer Richtung weisenden Stirnflächen 21 der Vorsprünge 15. Die Stirnflächen 21 erstrecken sich bis zum Grund der Taschen 4. Auch diese Aufnahmenuten 19 verbreitern sich in radialer Richtung nach außen in einem Winkel zwischen etwa 110° und etwa 130°, bevorzugt etwa 120°. Die Aufnahmenuten 19 springen in der Stirnfläche 21 nicht wie die Aufnahmenuten 18 in radialer Richtung, sondern in axialer Richtung zurück. In radialer Richtung nach innen werden die Aufnahmenuten 19 zunächst schmaler, um sich dann in radialer Richtung mit konstanter Breite fortzusetzen. Die Form der Aufnahmenuten 19 am Grund der Taschen 4 entspricht der Form der Aufnahmenuten 18 am Grund 20 der Taschen 3.

Selbstverständlich können auch die axial nach innen weisenden Wände der Taschen 3 mit einer axial zurückspringenden Aufnahmenut versehen sein, die die Aufnahmenut 18 radial nach außen fortsetzt und in ihrer Ausgestaltung der Aufnahmenut 19 im Bereich der Stirnflächen 21 entspricht.

Von dem in Fig. 1 gezeigten Ausführungsbeispiel sind weitere Modifikationen denkbar. So kann auf die Ausnehmungen 10 verzichtet werden, wenn das Taschenkettenrad 1 in hygienisch sensiblen oder in besonders stark verschmutzten Bereichen eingesetzt werden soll. An der dann glatten Stirnwand 9 können sich keine Schmutzreste festsetzen. Dies geht zwar mit einer geringeren Dämpfung einher. Da in derartigen Umgebungen jedoch meist mit kleinen Lasten gearbeitet wird, kann dieser Nachteil in Kauf genommen werden.

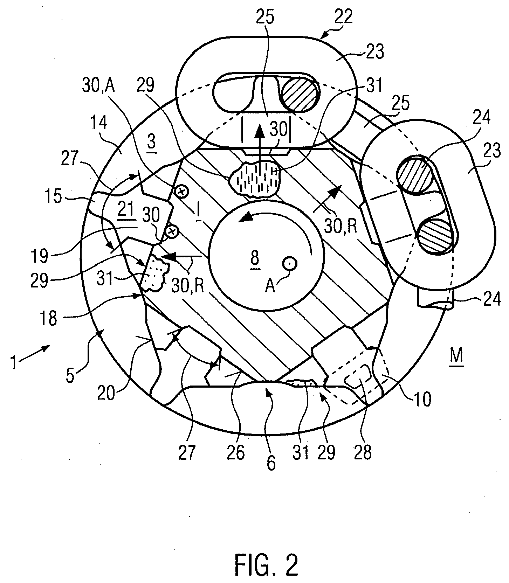

Fig. 2 zeigt eine schematische Schnittdarstellung durch die axiale Mittenebene M eines weiteren Ausführungsbeispiels eines Taschenkettenrades 1 senkrecht zur axialen Richtung A. Für Elemente, die hinsichtlich ihrer Funktion und/oder ihres Aufbaus bereits beim Ausführungsbeispiel der Fig. 1 beschreiben sind, werden der Einfachheit halber dieselben Bezugszeichen verwendet.

Zum einfacheren Verständnis ist ein Teil einer Gliederkette 22, hier eine Rundstahlkette, mit Kettengliedern 23, 24gezeigt. Die stehenden Kettenglieder 23 liegen in den tiefen und schmalen Taschen 4 in der axialen Mittenebene 4. Die Kettenglieder 23, 24 können am jeweiligen Grund 20, 26 der Taschen 3, 4 aufliegen. Die Kettenglieder 23, 24 weisen eine verdickte Schweißnaht 25 auf.

Zu erkennen ist in Fig. 2, dass die Ausnehmungen 10 (lediglich eine Ausnehmung ist beispielhaft dargestellt) sich in axialer Richtung A überlappen und ein Grund 28 der Ausnehmungen 10 innerhalb der axialen Projektion des Vorsprunges 15 liegen kann. Die Ausnehmung 10 kann sich zwischen zwei aufeinanderfolgenden gleichartigen Taschen 3 in axialer Richtung so tief erstrecken, so dass der Grund 28 in Umfangsrichtung U zwischen diesen Taschen liegt.

Ausschnitte 29 zeigen schematisch den faserverstärkten Kunststoff in Vergrößerung. Die Hauptfaserrichtung 30, also die Richtung, in die der der größte Teil der den Kunststoff verstärkenden Fasern 31 ausgerichtet ist, weist im Inneren I des Taschenkettenrades, im Bereich zwischen den Taschen 3, 4 und der Nabe 8, in die radiale Richtung R. Am Grund 20, 26 der Taschen 3, 4 verläuft die Hauptfaserrichtung 30 dagegen oberflächenparallel bevorzugt in axialer Richtung A in Richtung zum Rand 14 hin. Bezüglich der Mittenebene M sind die Hauptfaserrichtungen 30 symmetrisch verteilt.

Die radiale Hauptfaserrichtung 30 im Inneren I des Taschenkettenrades bewirkt eine hohe Druckfestigkeit und damit eine hohe Belastbarkeit des Taschenkettenrades 1. Der oberflächenparallele Faserverlauf an und unmittelbar unter den Taschen 3, 4 bewirkt eine hohe Verschleißfestigkeit des jeweiligen Taschengrundes 20, 26.

Wenigstens am Grund 20, 26 der Taschen 3, 4, bevorzugt jedoch im Bereich der gesamten Umfangsfläche 2 und/oder der gesamten Oberfläche des Taschenkettenrades 1 weist der Kunststoff eine gegenüber dem Inneren I erhöhte Biegefestigkeit auf, so dass die Kettenglieder stabil auf dem Grund 20, 26 der Taschen aufliegen. Der oberflächenparallele Verlauf der Hauptfaserrichtung 30 im Randbereich wirkt sich dabei erhöhend auf die Biegesteifigkeit aus. Durch eine gezielte Temperaturführung während des Spritzgussverfahrens, beispielsweise durch eine Steuerung der Abkühlgeschwindigkeit oder Steuerung der Temperatur der eingespritzten Schmelze über den Spritzgussverlauf, kann das Entstehen kristalliner oder teilkristalliner Strukturen und damit ebenfalls eine höhere Biegesteifigkeit gefördert werden.

Im Inneren I des Taschenkettenrades ist die Druckstabilität gegenüber den Randbereichen erhöht. Die von der Gliederkette getragene Last kann somit ohne Fließen an die Nabe geleitet werden.

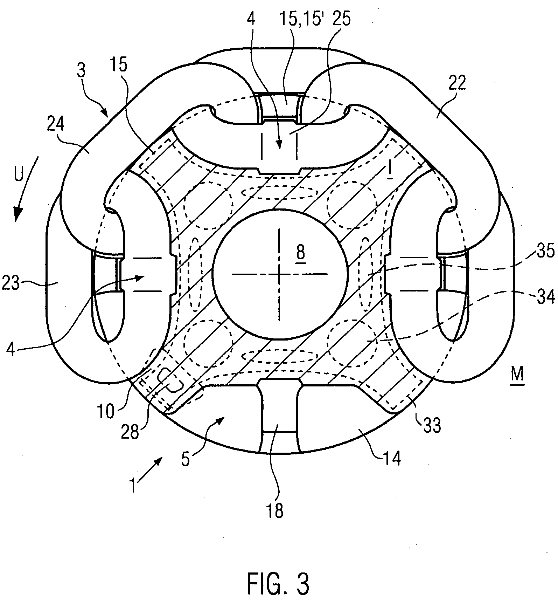

Fig. 3 zeigt eine Ausführung eines Taschenkettenrades 1 für eine schräg auflaufende Gliederkette 22. Für Elemente, die hinsichtlich ihrer Funktion oder ihres Aufbaus bereits aus der Beschreibung des vorangegangenen Ausführungsbeispiels bekannt sind, werden im Folgenden der Einfachheit halber dieselben Bezugszeichen verwendet.

Wie zu erkennen ist, weisen die Taschen 3, 4 aufgrund der gegenüber dem Ausführungsbeispiel der Fig. 1 und 2 veränderten Kettenlage zwar im Detail andere Formen auf. Dennoch sind im Prinzip dieselben Elemente wie bei dem vorangegangenen Ausführungsbeispiel vorhanden. Nach wie vor wechseln sich in Umfangsrichtung U die Taschen 3, 4 ab. Zwischen jeweils gleichartigen Taschen befindet sich ein Vorsprung 15, wie Fig. 3 anhand der Taschen 4 erkennen lässt.

Die zwischen den Taschen 3 liegenden Vorsprünge 15, in Fig. 3 der Übersichtlichkeit halber mit 15' gekennzeichnet, sind um in Umfangsrichtung U jeweils um eine halbe Taschenteilung gegenüber den zwischen den Taschen 4 liegenden Vorsprüngen 15 versetzt.

Auch beim Taschenkettenrad der Fig. 3 ist jedem Vorsprung 15 eine Ausnehmung 10 zugeordnet. Der Übersichtlichkeit ist in Fig. 3 lediglich eine Ausnehmung 10 dargestellt. Im Unterschied zum Ausführungsbeispiel der Fig. 1 sind jedoch die Ausnehmungen an den beiden Stirnseiten 7 (in Fig. 3 nicht gezeigt) entsprechend den zugeordneten Vorsprüngen ebenfalls um jeweils eine halbe Taschenteilung zueinander versetzt. Eine einem Vorsprung 15 zugeordnete Ausnehmung befindet sich an der Stirnseite 7, an der der jeweilige Rand 14 einen Vorsprung 15 ausbildet.

Auch bei der Ausführungsform der Fig. 3 sind die Aufnahmenuten 18, 19 bei den jeweiligen Taschen 3, 4 vorhanden, wobei die Aufnahmenuten 18, 19 bei den Taschen 3, 4 jeweils gleiche Gestalt haben. Die Aufnahmenuten 18 stellen Vertiefungen in axialer Richtung dar und öffnen sich in radialer Richtung nach außen in einem Öffnungswinkel zwischen 110 und 140°.

Die Orientierung der Fasern im Inneren I des Taschenkettenrades 1 ist dieselbe wie beim Ausführungsbeispiel der Fig. 1 und 2. Die Hauptfaserrichtungen 30 folgen wie beim vorangegangenen Ausführungsbeispiel der Symmetrie des Taschenkettenrades 1.

Das Taschenkettenrad 1 kann wenigstens eine Metallscheibe 33 oder ein Paar von axial beabstandeten Metallscheiben 33 aufweisen, die vom faserverstärktem Kunststoff umspritzt sind. Die wenigstens eine Metallscheibe 33 liegt koaxial zur Nabe 8. Sie kann mit Durchlässen 34 versehen sein, um den Schmelzefluss bei der Herstellung des Taschenkettenrades 1 nicht zu beeinträchtigen. Die Metallscheibe 33 erstreckt sich, in Umfangsrichtung betrachtet, zwischen wenigstens eine Art von Taschen 3 oder 4, so dass sie bei Bruch der Kunststoffmatrix die Gliederkette 22 abstützen kann. Die Metallscheibe 34 kann mit axial vorspringenden Abschnitten 35 versehen sein, um sie sicherer in der Kunststoffmatrix zu verankern.

Die Metallscheibe 33 kann ein Blechstanzteil sein. Die Durchlässe 34 können eingestanzt sein. Die Abschnitte 35 können von ausgestanzten und umgebogenen Zungen gebildet sein.

Die Metallscheibe kann auch bei einem Taschenkettenrad für gerade auflaufende Ketten eingesetzt werden.

### Bezugszeichenliste

| | |
|---|---|
| 1 | Taschenkettenrad |
| 2 | Umfangsfläche |
| 3 | Taschen |
| 4 | Taschen |
| 5 | Teilbereiche der Taschen 3 |
| 6 | Steg zwischen Teilbereichen 5 |
| 7 | Stirnseite |
| 8 | Nabe |
| 9 | Stirnwand |
| 10 | Ausnehmung |
| 11 | Ebene von Stirnwand |
| 12 | Öffnung von Ausnehmung |
| 13 | Kanten der Ausnehmung |
| 14 | Rand |
| 15 | Vorsprünge |
| 17 | Nut in Nabe |
| 18 | Aufnahmenut für Schweißnaht in Taschen 3 |
| 19 | Aufnahmenut für Schweißnaht in Taschen 4 |
| 20 | Grund |
| 21 | Stirnflächen der Vorsprünge 5 |
| 22 | Gliederkette |
| 23 | Stehende Kettenglieder |
| 24 | Liegende Kettenglieder |
| 25 | Schweißnaht |
| 26 | Grund der Taschen 4 |
| 27 | Offnungswinkel |
| 28 | Grund der Ausnehmung 10 |
| 29 | Vergrößerte Ausschnitte |
| 30 | Hauptfaserrichtung |
| 31 | Fasern |
| 33 | Metallscheibe |
| 34 | Öffnungen der Metallscheibe |
| 35 | axial vorspringender Abschnitt |
| A | Axialrichtung |
| I | Inneres des Taschenkettenrades |
| M | Mittenebene des Taschenkettenrades |
| R | Radiale Richtung |
| U | Umfangsrichtung |

## Patentansprüche

1. Taschenkettenrad (1) für Gliederketten (22), insbesondere Rund- oder Profilstahlketten, dessen Umfangsfläche (2) mit in Umfangsrichtung (U) abwechselnd unterschiedlich geformten, sich radial in das Taschenkettenrad erstreckenden Taschen (3, 4) versehen ist, **dadurch gekennzeichnet, dass** das Taschenkettenrad (1) in einem Stück mittels eines Spritzgussverfahrens aus wenigstens einem faserverstärkten Kunststoff gefertigt ist, wobei die Fasern (31) des faserverstärkten Kunststoffes in radialer Richtung im Inneren (I) des Taschenkettenrades zwischen den Taschen (3, 4) und einer Nabe (8) eine im Wesentlichen radiale Hauptfaserrichtung (30) und am Grund (20, 26) der Taschen (3, 4) eine im Wesentlichen oberflächenparallele Hauptfaserrichtung (30) aufweisen.

2. Taschenkettenrad (1) nach Anspruch 1, **dadurch gekennzeichnet, dass** die Biegefestigkeit des Taschenkettenrades (1) am Grund (20, 26) der Taschen (3, 4) gegenüber dem Inneren (I) erhöht ist.

3. Taschekettenrad (1) nach Anspruch 1 oder 2, **dadurch gekennzeichnet, dass** die Druckfestigkeit im Inneren (I) des Taschenkettenrades (1) höher ist als am Grund (20, 26) der Taschen (3, 4).

4. Taschenkettenrad (1) nach Anspruch 1 oder 3, **dadurch gekennzeichnet, dass** die Faser (31) eine bezüglich einer senkrecht zur Axialrichtung verlaufenden Mittenebene (M) des Taschenkettenrades (1) symmetrische Verteilung ihrer Hauptfaserrichtungen (30) aufweisen.

5. Taschenkettenrad (1) nach einem der Ansprüche 1 bis 4, **dadurch gekennzeichnet, dass** die Taschen (3, 4) nicht spanabhebend nachbearbeitet sind.

6. Taschenkettenrad (1) nach einem der Ansprüche 1 bis 5, **dadurch gekennzeichnet, dass** sich Bindenähte größtenteils in einem wenigstens einen Teil der Taschen (3, 4) axial begrenzenden Rand (14) befinden.

7. Taschenkettenrad (1) nach einem der Ansprüche 1 bis 6, **dadurch gekennzeichnet, dass** das Taschenkettenrad (1) mit einer spitzgegossenen, drehmomentübertragenden Welle-Nabe-Verbindung (17) oder einer Welle-Nabe-Verbindung aus einem umspritzten Einlageelement versehen ist.

8. Taschenkettenrad (1) nach einem der Ansprüche 1 bis 7, **dadurch gekennzeichnet, dass** das Taschenkettenrad (1) mit wenigstens einer umspritzten Metallscheibe (33) versehen ist, die senkrecht zur Axialrichtung (A) liegt und sich zwischen zumindest einem Teil der Taschen (3, 4) gleicher Form erstreckt.

9. Taschenkettenrad (1) nach einem der Ansprüche 1 bis 8, **dadurch gekennzeichnet, dass** das Taschenkettenrad (1) scheibenförmige Stirnwände (9) aufweist.

10. Taschenkettenrad (1) nach Anspruch 9, **dadurch gekennzeichnet, dass** in wenigstens einer Stirnwand (9) sich axial in das Taschenkettenrad (1) erstreckende Ausnehmungen (10) vorhanden sind.

11. Taschenkettenrad (1) nach Anspruch 10, **dadurch gekennzeichnet, dass** die Ausnehmungen (10) in radialer Richtung (R) unter Vorsprüngen (15), die in Umfangsrichtung (16) Taschen für gleichartige Kettenglieder (23, 24) der Gliederkette (22) voneinander abgrenzt und in axialer Richtung vorspringen, angeordnet sind.

12. Taschenkettenrad (1) nach Anspruch 10 oder 11, **dadurch gekennzeichnet, dass** das Volumen der Ausnehmungen (10) dem Volumen der zwischen den Vorsprüngen (15) liegenden Teilbereiche (5) der von den Vorsprüngen (15) getrennten Taschen (3, 4) zumindest etwa entspricht.

13. Taschenkettenrad (1) nach einem der Ansprüche 10 bis 12, **dadurch gekennzeichnet, dass** die in den Stirnseiten (7) des Taschenkettenrades (1) liegende Öffnung (12) der Ausnehmungen (10) in radialer Richtung (R) nach außen schmaler wird.

14. Taschenkettenrad (1) nach einem der Ansprüche 10 bis 12, **dadurch gekennzeichnet, dass** sich die Ausnehmungen (10) in axialer Richtung (A) in das Taschenkettenrad verjüngen.

15. Taschenkettenrad (1) nach einem der Ansprüche 1 bis 14, **dadurch gekennzeichnet, dass** wenigstens eine Form der Taschen (3, 4) mit einer in axialer Richtung (A) zurückspringenden Aufnahmenut (18, 19) für eine Schweißnaht (25) eines Kettengliedes (23, 24) versehen ist und dass sich die Aufnahmenut (18, 19) in radialer Richtung (R) an ihrem radial nach außen weisenden Ende verbreitert.

16. Taschenkettenrad (1) nach Anspruch 15, **dadurch gekennzeichnet, dass** die Aufnahmenut (18, 19) sich an ihrem radial äußeren Ende in einem Öffnungswinkel (27) von etwa 120° erweitert.

17. Taschenkettenrad (1) nach Anspruch 15 oder 16, **dadurch gekennzeichnet, dass** sich die Aufnahmenut (19) jeweils an der axialen Stirnseite (21) eines zwei gleichartige Taschen (3, 4) voneinander trennenden, axial vorspringenden Vorsprunges (15) befindet.

## Claims

1. A pocket-type chain wheel (1) for link chains (22), in particular round or profile steel chains, the circumferential surface (2) of the pocket-type chain wheel (1) being provided with pockets (3, 4) having alternately different shapes in the circumferential direction (U) and extending radially into the pocket-type chain wheel, **characterized in that** the pocket-type chain wheel (1) is produced in one piece from at least one fiber-reinforced plastic by means of an injection molding process, wherein the fibers (31) of the fiber-reinforced plastic exhibit a substantially radial main fiber direction (30) in the radial direction in the interior (I) of the pocket-type chain wheel between the pockets (3, 4) and a hub (8) and the fibers (31) of the fiber-reinforced plastic exhibit a substantially surface-parallel main fiber direction (30) on the bottom (20, 26) of the pockets (3, 4).

2. The pocket-type chain wheel (1) according to claim 1, **characterized in that** the bending strength of the pocket-type chain wheel (1) is higher on the bottom (20, 26) of the pockets (3, 4) than in the interior (I).

3. The pocket-type chain wheel (1) according to claim 1 or 2, **characterized in that** the pressure resistance in the interior (I) of the pocket-type chain wheel (1) is higher than on the bottom (20, 26) of the pockets (3, 4).

4. The pocket-type chain wheel (1) according to claim 1 or 3, **characterized in that** the main fiber directions (30) of the fibers (31) are distributed symmetrically with respect to a center plane (M) of the pocket-type chain wheel (1), the center plane (M) extending perpendicular to the axial direction.

5. The pocket-type chain wheel (1) according to one of the claims 1 to 4, **characterized in that** the pockets (3, 4) are not subjected to a chip-removing finishing treatment.

6. The pocket-type chain wheel (1) according to one of the claims 1 to 5, **characterized in that** the joint lines are predominantly located in a rim (14) which axially delimits at least a part of the pockets (3, 4).

7. The pocket-type chain wheel (1) according to one of the claims 1 to 6, **characterized in that** the pocket-type chain wheel (1) is provided with an injection-molded, torque-transmitting shaft-hub connection (17) or with a shaft-hub connection consisting of an insert element encased by injection molding.

8. The pocket-type chain wheel (1) according to one of the claims 1 to 7, **characterized in that** the pocket-type chain wheel (1) is provided with at least one metal disc (33) encased by injection molding, the metal disc (33) being positioned perpendicular to the axial direction (A) and extending between at least a part of the pockets (3, 4) that are identical in shape.

9. The pocket-type chain wheel (1) according to one of the claims 1 to 8, **characterized in that** the pocket-type chain wheel (1) comprises disc-shaped end walls (9).

10. The pocket-type chain wheel (1) according to claim 9, **characterized in that** at least one of the end walls (9) has provided therein recesses (10) extending axially into the pocket-type chain wheel (1).

11. The pocket-type chain wheel (1) according to claim 10, **characterized in that** the recesses (10) are arranged in the radial direction (R) below protrusions (15) delimiting pockets for like chain links (23, 24) of the link chain (22) from one another in the circumferential direction (16) and projecting in the axial direction.

12. The pocket-type chain wheel (1) according to claim 10 or 11, **characterized in that** the volume of the recesses (10) corresponds, at least approximately, to the volume of the subareas (5) of the pockets (3, 4) separated by the protrusions (15), the subareas (5) being located between the protrusions (15).

13. The pocket-type chain wheel (1) according to one of the claims 10 to 12, **characterized in that** the opening (12) of the recesses (10) narrows outwardly in the radial direction (R), the opening (12) being positioned in the end faces (7) of the pocket-type chain wheel (1).

14. The pocket-type chain wheel (1) according to one of the claims 10 to 12, **characterized in that** the recesses (10) taper in the axial direction (A) into the pocket-type chain wheel.

15. The pocket-type chain wheel (1) according to one of the claims 1 to 14, **characterized in that** at least one form of the pockets (3, 4) is provided with a reception groove (18, 19) for a weld (25) of a chain link (23, 24), the reception groove (18, 19) receding in the axial direction (A), and that the reception groove (18, 19) widens in the radial direction (R) at its radially outward directed end.

16. The pocket-type chain wheel (1) according to claim 15, **characterized in that** the reception groove (18, 19) widens at its radially outer end with an opening angle (27) of approx. 120°.

17. The pocket-type chain wheel (1) according to claim 15 or 16, **characterized in that** the respective reception groove (19) is located on the axial end face (21) of an axially projecting protrusion (15), which separates two pockets (3, 4) of the same type from one another.

## Revendications

1. Pignon à poches pour chaine (1) destiné à des chaines à maillons (22), notamment des chaines en acier rond ou profilé, dont la surface périphérique (2) est pourvue de poches (3, 4) s'étendant radialement vers l'intérieur du pignon à poches pour chaine et de forme alternativement différente dans la direction périphérique (U),
**caractérisé en ce que** le pignon à poches pour chaine (1) est fabriqué en une seule pièce au moyen d'un procédé de moulage par injection en au moins une matière plastique renforcée de fibres, les fibres (31) de la matière plastique renforcée de fibres présentant, en direction radiale à l'intérieur (I) du pignon à poches pour chaine, entre les poches (3, 4) et un moyeu (8), une orientation principale de fibres (30) sensiblement radiale, et au niveau du fond (20, 26) des poches (3, 4), une orientation principale de fibres (30) sensiblement parallèle à la surface.

2. Pignon à poches pour chaine (1) selon la revendication 1, **caractérisé en ce que** la résistance à la flexion du pignon à poches pour chaine (1) est augmentée au niveau du fond (20, 26) des poches (3, 4) par rapport à l'intérieur (I).

3. Pignon à poches pour chaine (1) selon la revendication 1 ou la revendication 2, **caractérisé en ce que** la résistance à la compression est plus élevée à l'intérieur (I) du pignon à poches pour chaine (1) qu'au niveau du fond (20, 26) des poches (3, 4).

4. Pignon à poches pour chaine (1) selon la revendication 1 ou la revendication 3, **caractérisé en ce que** les fibres (31) présentent une répartition de leurs orientations principales de fibres (30) symétrique par rapport à un plan médian (M) du pignon à poches pour chaine (1), qui s'étend perpendiculairement à la direction axiale.

5. Pignon à poches pour chaine (1) selon l'une des revendications 1 à 4, **caractérisé en ce que** les poches (3, 4) ne sont soumises à aucune reprise d'usinage par enlèvement de copeaux.

6. Pignon à poches pour chaine (1) selon l'une des revendications 1 à 5, **caractérisé en ce que** des lignes de soudure se situent pour leur plus grande partie dans une bordure (14) délimitant axialement au moins une partie des poches (3, 4).

7. Pignon à poches pour chaine (1) selon l'une des revendications 1 à 6, **caractérisé en ce que** le pignon à poches pour chaine (1) est pourvu d'une liaison arbre-moyeu (17) de transmission de couple, réalisée par moulage par injection, ou d'une liaison arbre-moyeu en un élément d'insert surmoulé par injection.

8. Pignon à poches pour chaine (1) selon l'une des revendications 1 à 7, **caractérisé en ce que** le pignon à poches pour chaine (1) est pourvu d'au moins une rondelle métallique (33) surmoulée par injection, qui est orientée perpendiculairement à la direction axiale (A) et s'étend entre au moins une partie des poches (3, 4) de même forme.

9. Pignon à poches pour chaine (1) selon l'une des revendications 1 à 8, **caractérisé en ce que** le pignon à poches pour chaine (1) présente des parois frontales (9) en forme de rondelle ou de disque.

10. Pignon à poches pour chaine (1) selon la revendication 9, **caractérisé en ce que** dans au moins une paroi frontale (9) existent des évidements (10) s'étendant axialement dans le pignon à poches pour chaine (1).

11. Pignon à poches pour chaine (1) selon la revendication 10, **caractérisé en ce que** les évidements (10) sont agencés, dans la direction radiale (R), sous des protubérances (15), qui, dans la direction périphérique (16), délimitent les unes des autres des poches pour des maillons de chaine (23, 24) de même type de la chaine à maillons (22), et font saillie axialement.

12. Pignon à poches pour chaine (1) selon la revendication 10 ou la revendication 11, **caractérisé en ce que** le volume des évidements (10) correspond au moins environ au volume des zones partielles (5), situées entre les protubérances (5), des poches (3, 4) séparées par lesdites protubérances (15).

13. Pignon à poches pour chaine (1) selon l'une des revendications 10 à 12, **caractérisé en ce que** l'ouverture (12) des évidements (10), située dans les faces frontales (7) du pignon à poches pour chaine (1), devient plus étroite vers l'extérieur dans la direction radiale (R).

14. Pignon à poches pour chaine (1) selon l'une des revendications 10 à 12, **caractérisé en ce que** les évidements (10) se rétrécissent dans la direction axiale (A) vers l'intérieur du pignon à poches pour chaine.

15. Pignon à poches pour chaine (1) selon l'une des revendications 1 à 14, **caractérisé en ce qu'**au moins une forme des poches (3, 4) est pourvue d'une rainure d'accueil (18, 19) en retrait dans la direction axiale (A) et destinée à un cordon de soudure (25) d'un maillon de chaine (23, 24), et **en ce que** la rainure d'accueil (18, 19) s'élargit à son extrémité dirigée radialement vers l'extérieur en se référant à la direction radiale (R).

16. Pignon à poches pour chaine (1) selon la revendication 15, **caractérisé en ce que** la rainure d'accueil (18, 19) s'élargit à son extrémité radialement extérieure, selon un angle d'ouverture (27) d'environ 120°.

17. Pignon à poches pour chaine (1) selon la revendication 15 ou la revendication 16, **caractérisé en ce que** la rainure d'accueil (19) se trouve respectivement sur la face frontale axiale (21) d'une protubérance (15) en saillie axiale, qui sépare l'une de l'autre deux poches (3, 4) de même type.
